# FASCICULE DE BREVET EUROPEEN

(11) **EP 3 415 749 B1**
(45) Date de publication et mention de la délivrance du brevet: **05.05.2021**
(21) Numéro de dépôt: 18174500.1
(22) Date de dépôt: 28.05.2018
(51) Int. Cl.: F02K 1/72, F02K 1/76

(54) **NACELLE AVEC SYSTÈME D'INVERSEUR DE POUSSÉE PRÉSENTANT DES PERTURBATIONS AÉRODYNAMIQUES LIMITÉES**
GONDEL MIT SCHUBUMKEHRSYSTEM, DAS BEGRENZTE AERODYNAMISCHE STÖRUNGEN AUFWEIST
NACELLE WITH THRUST REVERSER SYSTEM CREATING LIMITED AERODYNAMIC DISTURBANCES

(30) Priorité: 13.06.2017 FR 1755315
(43) Date de publication de la demande: 19.12.2018
(73) Titulaire: Airbus Operations S.A.S., 31060 Toulouse (FR)
(72) Inventeur: PAUTIS, Olivier, 31330 Merville (FR)
(74) Mandataire: Sarraméa, Claude

(56) Documents cités:
- EP-A1- 3 030 774
- DE-A1-102013 206 595
- US-A1- 2013 228 635
- US-A1- 2016 160 799

## Description

### DOMAINE TECHNIQUE

L'invention se rapporte au domaine des systèmes d'inverseur de poussée pour les turbomachines d'aéronef.

Elle concerne plus précisément des systèmes comprenant des grilles d'inversion de poussée, équipant les turbomachines à double flux.

L'invention se rapporte également à un aéronef comprenant des turbomachines équipées de tels systèmes d'inverseur de poussée. Elle s'applique préférentiellement aux avions commerciaux.

### ETAT DE LA TECHNIQUE ANTERIEURE

Des systèmes d'inversion de poussée sont par exemple connus des documents FR 2 935 444, FR 2 935 354, US 2013/228635, US 2016/160799, EP 3 030 774 et DE 10 2013 206595. Parmi les différents principes d'inversion de poussée mis en œuvre sur les turbomachines d'aéronef, il est connu des systèmes à grilles d'inversion, pourvues de passages orientés de façon à rediriger vers l'avant l'air provenant du canal secondaire, afin de générer l'effort de contre-poussée. L'air est forcé à s'extraire de ce canal secondaire par des portes d'inverseur obturant au moins partiellement ce canal, en configuration active du système.

En revanche, en configuration inactive, chaque porte d'inverseur se trouve en position escamotée dans laquelle elle participe à la formation de la paroi extérieure du canal secondaire, également dénommée OFS (de l'anglais « Outer Fixed Structure »). Plus précisément, dans cette configuration inactive du système d'inverseur, chaque porte reconstitue une partie de cette paroi extérieure du canal secondaire, au sein d'un capotage mobile externe de nacelle renfermant la grille d'inversion. Lors du passage de la configuration inactive à la configuration active, le capotage mobile externe est déplacé vers l'arrière par des vérins de manière à libérer la grille, et à amener les portes d'inverseur dans leur position d'obturation du canal secondaire, via une cinématique mécanique appropriée.

Ce principe, bien que largement répandu, souffre néanmoins d'un problème de perturbations aérodynamiques du flux d'air traversant le canal secondaire en configuration inactive du système. En effet, dans cette configuration, l'écoulement d'air au sein du canal secondaire est perturbé lors de son passage sur les zones de jonction entre le corps du capotage mobile externe, et les portes d'inverseur rapportées sur ce corps. Il en découle de la trainée ainsi que des pertes de pression au sein du canal secondaire, qui conduisent à une diminution des performances globales de la turbomachine.

Il existe donc un besoin d'optimisation de la conception de ces systèmes d'inverseur de poussée, afin de diminuer les perturbations du flux d'air dans le canal secondaire, en configuration inactive du système d'inverseur de poussée.

### EXPOSE DE L'INVENTION

Pour répondre au moins partiellement à ce besoin, l'invention a pour objet une nacelle d'une turbomachine d'aéronef à double flux comprenant un système d'inverseur de poussée, le système d'inverseur comprenant au moins une grille d'inversion de poussée à travers laquelle est destiné à circuler l'air d'un canal secondaire de la turbomachine en configuration active du système d'inverseur, celui-ci comportant également au moins une porte d'inverseur configurée pour obturer au moins en partie ledit canal secondaire lorsque le système est en configuration active, le système comprenant également au moins un vérin d'actionnement.

Selon l'invention, dans une configuration inactive du système d'inverseur, la porte est logée dans un espace de logement situé en dehors dudit canal secondaire et dans lequel se trouve également ladite grille entraînée par ledit vérin et dont une extrémité arrière est solidaire d'un capotage mobile externe de nacelle, le système comprenant également :
- une première pièce de liaison dont une première extrémité est raccordée à l'intérieur dudit capotage mobile externe de nacelle par une première liaison articulée, et dont une seconde extrémité est raccordée sur la porte d'inverseur par une seconde liaison articulée ;
- une seconde pièce de liaison dont une première extrémité est raccordée sur une extrémité arrière de la porte d'inverseur par une troisième liaison articulée, et dont une seconde extrémité est raccordée sur une paroi intérieure du canal secondaire par une quatrième liaison articulée.

De plus, la porte d'inverseur est montée à son extrémité avant sur la grille par une cinquième liaison permettant à cette extrémité avant de coulisser le long de la grille et de pivoter par rapport à celle-ci, la seconde liaison articulée étant agencée entre la troisième liaison articulée et la cinquième liaison de sorte que lors d'un passage de la configuration inactive à la configuration active, l'action dudit vérin produise simultanément :
- un déplacement vers l'arrière de la grille en direction d'une ouverture de nacelle, libérée par le capotage mobile externe de nacelle entraîné vers l'arrière avec la grille ; et
- un mouvement combiné de la porte d'inverseur relativement à la grille conduisant d'une part au déplacement de l'extrémité avant de la porte vers l'arrière le long de la grille, et d'autre part au pivotement de cette porte selon la cinquième liaison de façon à provoquer la plongée de son extrémité arrière dans le canal secondaire.

L'invention contraste ainsi avec les réalisations conventionnelles des systèmes d'inverseur à grilles, en prévoyant une porte d'inverseur agencée en dehors du canal secondaire en configuration inactive du système, et qui se déplace relativement à la grille tout en plongeant dans le canal secondaire lors du passage vers la configuration active. Grâce à cette conception spécifique à la présente invention, lorsque le système se trouve en configuration inactive, la porte d'inverseur ne perturbe plus le flux d'air transitant par le canal secondaire de la turbomachine. Avantageusement, cela permet d'améliorer les performances globales de la turbomachine.

L'invention prévoit de préférence au moins l'une des caractéristiques optionnelles suivantes, prises isolément ou en combinaison.

Dans la configuration inactive, la première pièce de liaison est logée dans l'espace de logement situé en dehors dudit canal secondaire tout en restant à l'intérieur d'un capotage fixe externe de la nacelle, et la seconde pièce de liaison est logée en partie dans cet espace de logement.

En configuration inactive, une partie de la seconde pièce de liaison est agencée sensiblement radialement dans le canal secondaire, et de préférence destinée à être masquée d'un flux d'air secondaire par un bras d'un carter intermédiaire de la turbomachine, également dénommé OGV (de l'anglais « *Outlet Guide Vane* »), et en configuration active, ladite seconde pièce de liaison est agencée localement sensiblement parallèlement à la paroi intérieure du canal secondaire.

La première pièce de liaison adopte de préférence une forme globale d'un L.

Le vérin comprend une tige de vérin articulée sur une extrémité avant de la grille.

La cinquième liaison comporte au moins un rail de guidage de porte solidaire de la grille et s'étendant le long de celle-ci, ainsi qu'un galet coopérant avec ce rail et monté sur l'extrémité avant de la porte d'inverseur.

Ledit espace de logement est un espace intérieur de la nacelle.

Dans la configuration inactive, la grille et la porte d'inverseur sont sensiblement parallèles et se situent chacune au moins en partie en regard radialement d'un carter de soufflante de la turbomachine.

Le système d'inverseur de poussée comporte plusieurs grilles adjacentes selon la direction tangentielle de la turbomachine, de préférence de manière à former un ensemble de grilles s'étendant sur un secteur angulaire de 300 à 360° autour d'un axe longitudinal de la turbomachine, et chaque grille est associée à une porte d'inverseur.

Les grilles sont reliées mécaniquement les unes aux autres de sorte que le nombre de vérins soit préférentiellement inférieur au nombre de grilles. Néanmoins, ces deux nombres pourraient être identiques, sans sortir du cadre de l'invention.

L'invention a également pour objet une turbomachine d'aéronef à double flux comprenant un système d'inverseur de poussée tel que celui décrit ci-dessus, ainsi qu'un aéronef comprenant au moins une telle turbomachine.

D'autres avantages et caractéristiques de l'invention apparaîtront dans la description détaillée non limitative ci-dessous.

### BREVE DESCRIPTION DES DESSINS

Cette description sera faite au regard des dessins annexés parmi lesquels ;
- la figure 1 représente une vue en plan de côté d'un aéronef comprenant une turbomachine équipée d'un système d'inverseur de poussée selon l'invention ;
- la figure 2 représente une vue partielle en coupe longitudinale de la turbomachine montrée sur la figure précédente, avec son système d'inverseur de poussée en configuration inactive ;
- la figure 3 représente une vue partielle en perspective de la turbomachine montrée sur la figure précédente ;
- la figure 4 représente une vue en coupe transversale de la turbomachine montrée sur les figures 2 et 3 (sans les OGV) ;
- la figure 5 représente une vue analogue à celle de la figure 2, au cours d'un passage d'une configuration inactive à une configuration active du système d'inverseur de poussée ; et
- les figures 6 à 8 représentent des vues analogues à celles des figures 2 à 4, avec le système d'inverseur de poussée se trouvant dans la configuration active.

### EXPOSE DETAILLE DE MODES DE REALISATION PREFERES

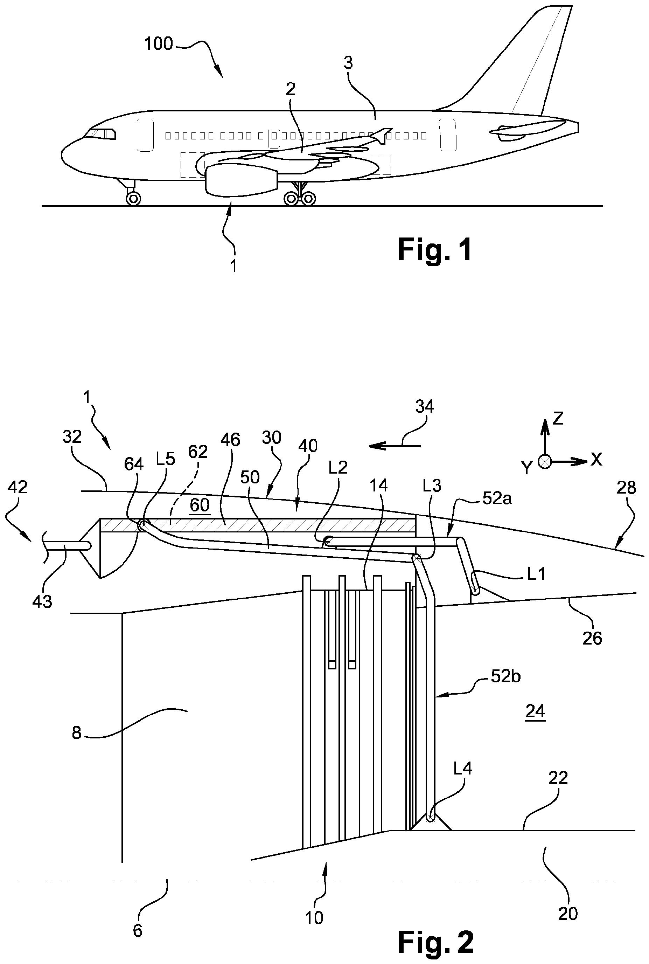

En référence à la figure 1, il est représenté un aéronef 100 du type avion commercial, comprenant deux ailes 2 (une seule visible sur la figure 1) fixées à un fuselage 3 et portant chacune une turbomachine 1 du type à double flux, tel qu'un turboréacteur.

Un mode de réalisation préféré de la turbomachine 1 va à présent être décrit en référence aux figures 2 à 4. Dans toute la description qui va suivre, par convention, la direction X correspond à la direction longitudinale de la turbomachine, cette direction étant parallèle à l'axe longitudinal 6 de cette turbomachine. D'autre part, la direction Y correspond à la direction orientée transversalement par rapport à la turbomachine, et la direction Z correspond à la direction verticale ou de la hauteur, ces trois directions X, Y, Z étant orthogonales entre elles.

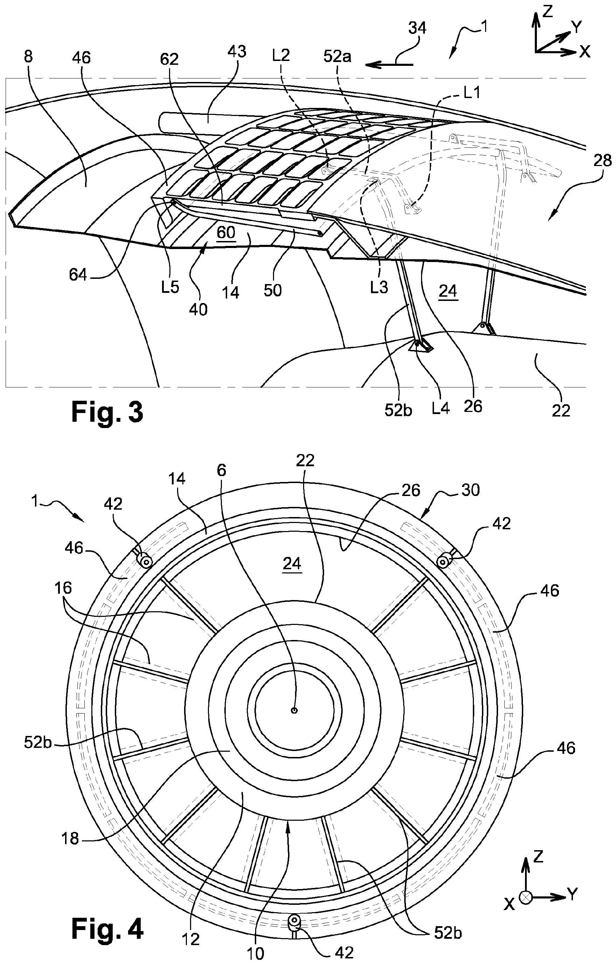

De manière classique, la turbomachine 1 comprend un carter de soufflante 8 centré sur l'axe 6 et prolongé par un carter intermédiaire 10, formé par un moyeu 12 et une virole extérieure 14 reliée à ce moyeu à l'aide de bras 16 représentés schématiquement sur la figure 4. Les bras 16 s'étendent sensiblement radialement, et constituent au moins pour certains d'entre eux des aubages directeurs de sortie, également dénommés OGV (de l'anglais « Outlet Guide Vane »). De préférence, au moins certains de ces bras 16 sont structuraux en plus d'être profilés aérodynamiquement. Le moyeu 12 est prolongé vers l'arrière par un carter central également dit carter core, référencé 18 sur la figure 4 et renfermant le cœur de la turbomachine. Autour du carter central, il est prévu un compartiment inter-veine 20 délimité par un capotage interne fixe 22, également dénommé IFS. Il s'agit plus précisément d'une paroi intérieure 22 délimitant un canal annulaire secondaire 24 de la turbomachine. Ce canal 24 est délimité à l'avant par le carter de soufflante 8 ainsi que par le carter intermédiaire, puis se prolonge vers l'arrière en étant donc délimité intérieurement par le capotage 22, et extérieurement par une paroi extérieure du canal secondaire 24, également dénommée OFS. Celle-ci est intégrée à un capotage mobile externe de nacelle 28. En effet, la turbomachine 1 comporte également une nacelle 30, dont une partie avant est réalisée par des capots creux 32 entourant le carter de soufflante 8 et la virole extérieure 14 du carter intermédiaire. Ces capots 32 sont généralement dénommés capots de soufflante. Ils sont montés articulés de manière à permettre l'accès aux opérateurs, pour la réalisation des opérations de maintenance. Les capots 32 sont prolongés vers l'arrière par le capotage mobile externe 28 précité, ce dernier pouvant en effet être translaté vers l'arrière relativement aux capots de nacelle 32, selon l'axe longitudinal 6. A cet égard, il est mentionné que dans toute la description, les termes « avant » et « arrière » sont considérés par rapport à la direction d'avancement de l'aéronef suite à la poussée de ses turbomachines, cette direction d'avancement étant représentée par la flèche 34 sur la figure 2.

Dans cet environnement, il est intégré un système d'inverseur de poussée 40 spécifique à la présente invention, et dont un mode de réalisation va à présent être décrit dans sa configuration inactive, telle que représenté sur les figures 2 à 4.

Tout d'abord, il est noté que le système d'inverseur 40 est réalisé à partir de plusieurs modules qui se répètent et qui sont agencés de manière adjacente dans la direction tangentielle de la turbomachine, tout autour de l'axe 6. Comme cela sera détaillé ci-après, chaque module comporte une grille d'inversion de poussée 46 et une porte d'inverseur 50. Au moins certains de ces modules comprennent chacun, en partie avant, un vérin 42 dont le corps est par exemple monté fixement sur le carter de soufflante 8. Le vérin 42 comprend une tige de vérin 43 qui est montée de façon articulée sur une extrémité avant de la grille d'inversion de poussée 46.

En configuration inactive, la grille 46 se trouve située radialement vers l'extérieur, en regard du carter de soufflante 8 et de la virole extérieure 14 du carter intermédiaire. La grille 46 est située en avant par rapport au capotage mobile externe 28, et l'extrémité arrière de cette grille 46 est solidaire de l'extrémité avant du capotage 28. Par conséquent, durant les mouvements observés au cours de l'actionnement du système d'inverseur de poussée 40, la grille 46 et le capotage 28 forment un ensemble unique et solidaire qui subit les mêmes déplacements axiaux.

Dans la configuration inactive, la grille 46 et la tige de vérin 43 se trouvent par conséquent dans une position avancée de la nacelle, au niveau des capots de soufflante, qui présentent un diamètre habituellement plus élevé que celui de la partie arrière effilée de la nacelle, ce qui permet de bénéficier de plus de place pour leur intégration. Il en résulte avantageusement une nacelle 30 de diamètre extérieur réduit. A cet égard, il est noté que les seuls vérins 42 sont capables de mettre en mouvement l'ensemble des pièces du module, de sorte qu'aucun actionneur additionnel n'est prévu dans le capotage 28. Ce dernier peut ainsi présenter un dimensionnement réduit, impactant positivement le dimensionnement du reste de la nacelle.

La grille d'inversion 46 peut être de forme plane conventionnelle, ou bien légèrement arrondie selon la direction circonférentielle. Elle comporte de manière classique des orifices à travers lesquels l'air du canal secondaire 24 est destiné à circuler, lorsque le système d'inverseur 40 se trouve en configuration active. Elle est capable de réorienter vers l'avant un flux d'air la traversant, grâce à des ailettes ou à des éléments analogues définis entre les orifices.

Sous la grille 46, le système d'inverseur 40 comporte la porte d'inverseur 50, de préférence sensiblement plane et réalisée d'une seule pièce. Dans la configuration inactive, la porte 50 est sensiblement parallèle à la grille 46, et cette porte se situe également au moins en partie en regard radialement du carter de soufflante 8.

La porte 50 présente une conception classique, capable en configuration active d'obturer au moins en partie le canal secondaire 24, comme cela sera décrit ultérieurement.

En plus de la grille 46 et de la porte 50, le système d'inverseur 40 comporte deux pièces de liaison permettant d'obtenir la cinématique et la synchronisation désirées pour la porte et la grille.

Il s'agit tout d'abord d'une première pièce de liaison 52a, en forme globale de L, dont une première extrémité est raccordée à l'intérieur du capotage 28 par une première liaison articulée L1. En effet, le capotage 28 présente un corps creux s'ouvrant vers l'avant, qui est en partie défini par la paroi intérieure 26 du canal secondaire 24. C'est sur cette paroi 26, à l'intérieur du creux qu'elle définit, que la première extrémité de la première pièce de liaison 52a est montée articulée. Sa seconde extrémité, opposée à la première, est raccordée sur une portion centrale de la porte d'inverseur 50 par une seconde liaison articulée L2. Ces deux liaisons L1 et L2, comme l'ensemble des autres liaisons qui seront décrites ci-après, définissent des axes de pivotement qui sont tous sensiblement parallèles entre eux au sein d'un même module d'inverseur. Ces axes de pivotement sont préférentiellement orthogonaux à l'axe longitudinal 6, et orientés tangentiellement.

Il s'agit ensuite d'une seconde pièce de liaison 52b dont une première extrémité est raccordée sur une extrémité arrière de la porte d'inverseur 50, à l'aide d'une troisième liaison articulée L3. Sa seconde extrémité, opposée à la première, est raccordée sur la paroi intérieure 22 du canal secondaire 24 par une quatrième liaison articulée L4, proche de la virole extérieure 14 du carter intermédiaire. La seconde pièce de liaison 52b présente une forme générale droite, comme une bielle, dont la première extrémité peut éventuellement être légèrement inclinée par rapport au reste de la bielle. Dans la configuration inactive, cela permet de la rapprocher de l'extrémité arrière de la porte 50 sur laquelle elle est articulée.

Dans la configuration inactive du système d'inverseur 40, la première pièce de liaison 52a, la grille 46 et la porte 50 sont ainsi agencées entièrement dans un espace de logement 60, défini par la nacelle en dehors du canal secondaire 24, dans l'épaisseur de la nacelle. Le canal secondaire 24 n'est donc pas perturbé par la présence de ces éléments, et la paroi extérieure 26 de délimitation du canal secondaire 24 peut donc être continue, par exemple en étant réalisée d'une seule pièce. Cela permet d'améliorer sensiblement les performances aérodynamiques globales de la turbomachine.

L'espace de logement 60 est en partie défini par le creux des capots de soufflante 32, ainsi que par le creux du capotage mobile externe 28 situé dans la continuité axiale arrière du creux des capots de soufflante 32. En configuration inactive, cet espace 60 loge également le vérin 42, ainsi que la première extrémité de la seconde pièce de liaison 52b. L'autre partie de la seconde pièce de liaison 52b se trouve quant à elle agencée sensiblement radialement dans le canal secondaire 24, et sensiblement proche d'un plan arrière du carter intermédiaire 10. Chaque pièce de liaison 52b est masquée du flux d'air secondaire traversant le canal 24, par un bras aérodynamique structural 16 de ce carter 10 qui est radialement contenu dans un même plan, comme cela est montré sur la figure 4. Par conséquent, du fait de sa position particulière dans la continuité de l'un de ces bras 16, la seconde pièce de liaison 52b ne génère que très peu de perturbations du flux d'air secondaire.

En outre, la porte d'inverseur 50 est montée à son extrémité avant sur la grille 46 par une cinquième liaison L5, la seconde liaison L2 se trouvant ainsi agencée entre la troisième liaison L3 et cette cinquième liaison L5. Cette dernière comporte un ou plusieurs rails de guidage 62 solidaires de la grille, prenant préférentiellement la forme de rainures oblongues pratiquées directement dans cette même grille, le long, dans l'épaisseur et de chaque côté de celle-ci. Chaque rail 62 s'étend axialement de façon parallèle à la grille 46, et coopère avec un galet 64 monté sur l'extrémité avant de la porte d'inverseur 50.

Grâce à cette cinquième liaison L5, l'extrémité avant de la porte 50 est capable, de façon simultanée, de coulisser le long de la grille 46 et de pivoter par rapport à celle-ci.

A cet égard, il est précisé que les modules du système d'inverseur peuvent être reliés les uns aux autres au niveau des grilles, par les galets 64. Chacun de ces galets peut en effet faire partie de moyens de liaison mécaniques prévus entre les grilles 46 directement consécutives dans la direction tangentielle. Ces grilles sont d'ailleurs prévues dans un nombre suffisant pour qu'elles forment un ensemble s'étendant sur un secteur angulaire de 300 à 360° autour de l'axe longitudinal 6 de la turbomachine. A titre d'exemple indicatif, il peut s'agir par exemple d'un nombre de grilles compris entre 4 et 12. Il en est de même pour les portes d'inverseur, qui sont destinées à obstruer le même secteur angulaire du canal secondaire 24, en configuration active du système d'inverseur.

Dans ce cas de figure, puisque les grilles 46 sont fixées les unes aux autres, il n'est pas nécessaire de prévoir un vérin 42 pour chaque module, de sorte que le nombre de ces vérins 42 peut être inférieur au nombre de grilles. A titre d'exemple, il est prévu un vérin 42 toutes les deux grilles 46 le long de la direction tangentielle. Dans le mode représenté sur la figure 4, il est prévu neuf grilles 46 et seulement trois vérin 42.

L'une des particularités de l'invention réside dans le fait que l'actionnement des vérins 42 entraîne la mise en mouvement de l'ensemble des pièces du système d'inverseur de poussée, sans qu'il ne soit nécessaire de prévoir des moyens d'actionnement additionnels. Cette disposition particulière dite « en ligne » permet de bénéficier d'une simplicité de conception, qui par ailleurs limite la masse globale du système d'inverseur de poussée et donc augmente les performances globales de la turbomachine.

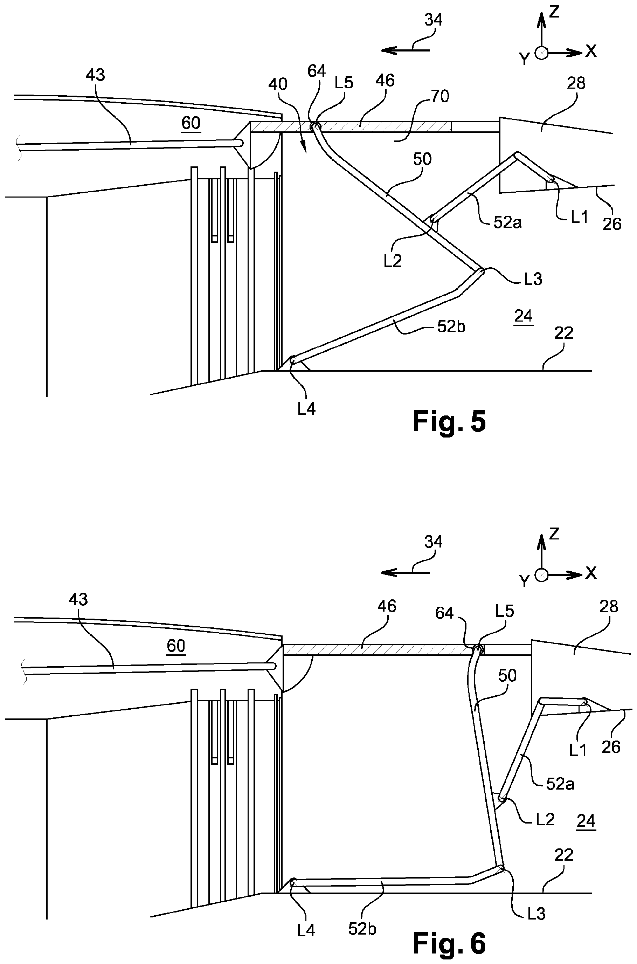

En fonctionnement, lorsque chaque vérin 42 est actionné de manière à passer de la configuration inactive à la configuration active, la tige de vérin 43 est extraite vers l'arrière comme cela a été représenté sur la figure 5 montrant une configuration intermédiaire entre la configuration inactive, et la configuration active.

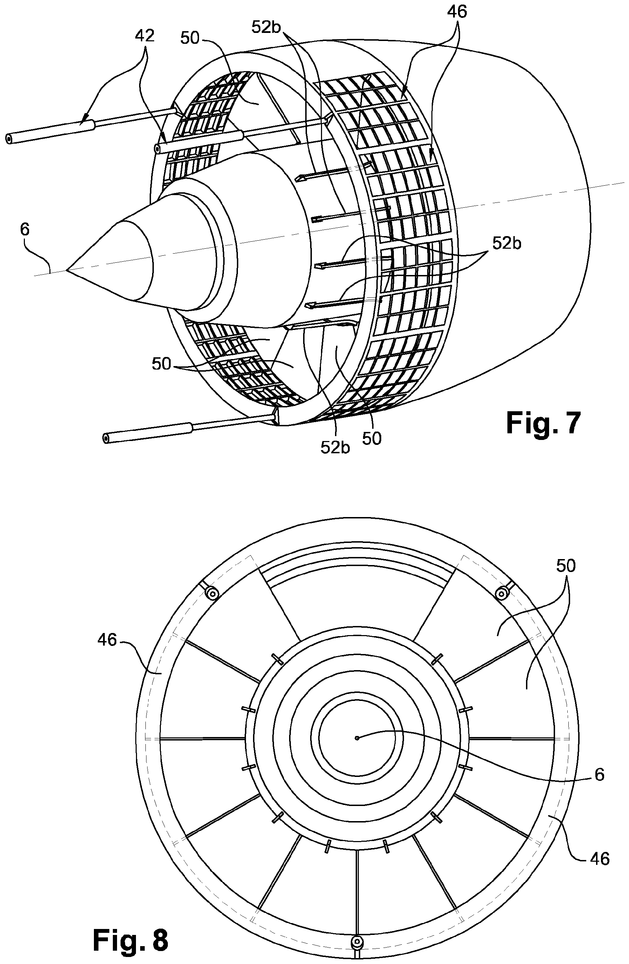

La sortie de la tige de vérin 43, combinée aux actions de basculement et d'entraînement provoquées par les pièces de liaison 52a, 52b, produisent différents mouvements qui vont à présent être décrits en référence à la figure 5 montrant une configuration intermédiaire, et aux figures 6 à 8 montrant la configuration active.

Il est en effet observé un déplacement vers l'arrière de la grille 46, directement du fait de l'action de la tige de vérin 43. Ce déplacement est une translation selon la direction X, qui amène la grille 46 à pénétrer dans une ouverture de nacelle 70 qui est progressivement libérée par le capotage mobile externe 28. Ce dernier subit le même mouvement que la grille 46.

Simultanément, la porte d'inverseur 50 subit un mouvement combiné relativement à la grille 46, toujours en mouvement. Ce mouvement combiné, dicté en particulier par les pièces de liaison 52a, 52b, conduit au déplacement de l'extrémité avant de la porte 50 vers l'arrière le long de la grille 46. Il conduit aussi au pivotement de cette porte 50 selon la cinquième liaison L5, autour de l'axe des galets 64. Ce pivotement provoque la plongée de l'extrémité arrière de la porte 50 dans le canal secondaire 24.

Les éléments judicieusement positionnés du système 40 permettent ainsi une parfaite synchronisation des mouvements de sorte que la porte 50 puisse sortir de l'espace 60 dans lequel elle est agencée axialement, tout en plongeant progressivement vers l'intérieur du canal secondaire 24, jusqu'à aboutir à une position sensiblement radiale telle que visible sur les figures 6 à 8. Dans la configuration active représentée sur ces figures, la grille 46 et la porte 50 sont agencées sensiblement orthogonalement l'une par rapport à l'autre. De plus, l'extrémité avant de la porte 50 (correspondant à son extrémité radialement externe en configuration active), se trouve 12 toujours raccordée à la grille 46 par la cinquième liaison L5, au niveau d'une extrémité arrière de cette grille jusqu'à laquelle cette liaison L5 s'est déplacée. La porte 50 demeure ainsi entièrement sous la grille 46, celle-ci comblant l'ouverture 70 sans plonger dans le canal 24. Cela implique avantageusement un blocage du flux d'air dans le canal 24 et force son passage par la grille 46.

Au cours de ces déplacements, les deux pièces de liaison 52a, 52b remplissent leur fonction de basculeur et d'entraînement de la porte 50. La seconde pièce de liaison 52b pivote ainsi selon la quatrième liaison articulée L4, jusqu'à atteindre une position où elle est localement sensiblement parallèle et plaquée contre la paroi intérieure 22 du canal secondaire. Les perturbations du flux secondaire provoquées par ces pièces de liaison 52b sont mineures. Egalement, la base du L de la première pièce de liaison 52a est plaquée contre la paroi extérieure mobile 26, à l'intérieur du capotage 28, tandis que la branche du L est extraite de l'espace 60 et fait légèrement saillie dans le canal secondaire 24 et à l'arrière de la porte 50 qui obture, au moins partiellement, le veine aérodynamique 24.

Bien entendu, diverses modifications peuvent être apportées par l'homme du métier à l'invention qui vient d'être décrite, uniquement à titre d'exemples non limitatifs, si ces modifications sont incluses dans l'étendue des revendications.

## Revendications

1. Nacelle (30) d'une turbomachine (1) d'aéronef à double flux comprenant un système d'inverseur de poussée (40), le système d'inverseur comprenant au moins une grille d'inversion de poussée (46) à travers laquelle est destiné à circuler l'air d'un canal secondaire (24) de la turbomachine en configuration active du système d'inverseur, celui-ci comportant également au moins une porte d'inverseur (50) configurée pour obturer au moins en partie ledit canal secondaire (24) lorsque le système est en configuration active, le système comprenant également au moins un vérin d'actionnement (42),
**caractérisée en ce que** dans une configuration inactive du système d'inverseur, la porte (50) est logée entièrement dans un espace de logement (60) situé en dehors dudit canal secondaire (24) et dans lequel se trouve également entièrement ladite grille (46) entraînée par ledit vérin (42) et dont une extrémité arrière est solidaire d'un capotage mobile externe de nacelle (28), le système comprenant également :
- une première pièce de liaison (52a) dont une première extrémité est raccordée à l'intérieur dudit capotage mobile externe de nacelle (28) par une première liaison articulée (L1), et dont une seconde extrémité est raccordée sur la porte d'inverseur (50) par une seconde liaison articulée (L2) ;
- une seconde pièce de liaison (52b) dont une première extrémité est raccordée sur une extrémité arrière de la porte d'inverseur (50) par une troisième liaison articulée (L3), et dont une seconde extrémité est raccordée sur une paroi intérieure (22) du canal secondaire (24) par une quatrième liaison articulée (L4) ;
et **en ce que** la porte d'inverseur (50) est montée à son extrémité avant sur la grille par une cinquième liaison (L5) permettant à cette extrémité avant de coulisser le long de la grille (46) et de pivoter par rapport à celle-ci, la seconde liaison articulée (L2) étant agencée entre la troisième liaison articulée (L3) et la cinquième liaison (L5) de sorte que lors d'un passage de la configuration inactive à la configuration active, la présence des première et seconde pièces de liaison (52a, 52b) combinée à l'action dudit vérin (42) produisent simultanément :
- un déplacement vers l'arrière de la grille (46) en direction d'une ouverture de nacelle (70), libérée par le capotage mobile externe de nacelle (28) entraîné vers l'arrière avec la grille (46) ; et
- un mouvement combiné de la porte d'inverseur (50) relativement à la grille (46) conduisant d'une part au déplacement de l'extrémité avant de la porte (50) vers l'arrière le long de la grille (46), et d'autre part au pivotement de cette porte selon la cinquième liaison (L5) de façon à provoquer la plongée de son extrémité arrière dans le canal secondaire (24).

2. Nacelle selon la revendication 1, **caractérisée en ce que** dans la configuration inactive, la première pièce de liaison est logée dans l'espace de logement (60), et **en ce que** la seconde pièce de liaison est logée en partie dans cet espace de logement (60).

3. Nacelle selon l'une quelconque des revendications précédentes, **caractérisée en ce qu'**en configuration inactive, une partie de la seconde pièce de liaison (52b) est agencée sensiblement radialement dans le canal secondaire (24), et de préférence destinée à être masquée d'un flux d'air secondaire par un bras (16) d'un carter intermédiaire de la turbomachine, et **en ce qu'**en configuration active, ladite seconde pièce de liaison (52b) est agencée localement sensiblement parallèlement à la paroi intérieure (22) du canal secondaire.

4. Nacelle selon l'une quelconque des revendications précédentes, **caractérisée en ce que** la première pièce de liaison (52a) adopte une forme globale d'un L.

5. Nacelle selon l'une quelconque des revendications précédentes, **caractérisée en ce que** le vérin comprend une tige de vérin (43) articulée sur une extrémité avant de la grille (46).

6. Nacelle selon l'une quelconque des revendications précédentes, **caractérisée en ce que** la cinquième liaison (L5) comporte au moins un rail de guidage (62) de porte solidaire de la grille et s'étendant le long de celle-ci, ainsi qu'un galet coopérant avec ce rail et monté sur l'extrémité avant de la porte d'inverseur (50).

7. Nacelle selon l'une quelconque des revendications précédentes, **caractérisée en ce que** ledit espace de logement (60) est un espace intérieur de la nacelle (30).

8. Nacelle selon l'une quelconque des revendications précédentes, **caractérisée en ce que** dans sa configuration inactive, la grille (46) et la porte d'inverseur (50) sont sensiblement parallèles et se situent chacune au moins en partie en regard radialement d'un carter de soufflante (8) de la turbomachine.

9. Nacelle selon l'une quelconque des revendications précédentes, **caractérisée en ce que** le système d'inverseur de poussée comporte plusieurs grilles (46) adjacentes selon la direction tangentielle de la turbomachine, de préférence de manière à former un ensemble de grilles s'étendant sur un secteur angulaire de 300 à 360° autour d'un axe longitudinal (6) de la turbomachine, et **en ce que** chaque grille (46) est associée à une porte d'inverseur (50).

10. Nacelle selon la revendication précédente, **caractérisée** en ce les grilles (46) sont reliées mécaniquement les unes aux autres de sorte que le nombre de vérins (42) soit préférentiellement inférieur au nombre de grilles.

11. Turbomachine d'aéronef (1) à double flux comprenant une nacelle (30) selon l'une quelconque des revendications précédentes.

12. Aéronef (100) comprenant au moins une turbomachine (1) selon la revendication précédente.

## Patentansprüche

1. Triebwerksgondel (30) eines Zweistrom-Luftfahrzeugturbotriebwerks (1), umfassend ein Schubumkehrersystem (40), wobei das Umkehrersystem mindestens eine Schubumkehrkaskade (46) umfasst, durch die die Luft eines Sekundärkanals (24) des Turbotriebwerks in aktiver Konfiguration des Umkehrersystems zirkulieren soll, wobei dieses auch mindestens eine Umkehrertür (50) aufweist, die dazu ausgestaltet ist, den Sekundärkanal (24) mindestens teilweise zu verschließen, wenn das System in aktiver Konfiguration ist, wobei das System auch mindestens einen Betätigungszylinder (42) umfasst, **dadurch gekennzeichnet, dass** die Tür (50) in einer inaktiven Konfiguration des Umkehrersystems vollständig in einem außerhalb des Sekundärkanals (24) angeordneten Aufnahmeraum (60) aufgenommen ist, in dem sich auch die ganze Kaskade (46) befindet, die von dem Zylinder (42) angetrieben wird und deren hinteres Ende fest mit einer beweglichen äußeren Triebwerksgondelverkleidung (28) verbunden ist, wobei das System ferner Folgendes umfasst:
- ein erstes Verbindungsteil (52a), dessen erstes Ende mittels einer ersten Gelenkverbindung (L1) mit dem Inneren der beweglichen äußeren Triebwerksgondelverkleidung (28) verbunden ist und dessen zweites Ende mittels einer zweiten Gelenkverbindung (L2) mit der Umkehrertür (50) verbunden ist,
- ein zweites Verbindungsteil (52b), dessen erstes Ende mittels einer dritten Gelenkverbindung (L3) mit einem hinteren Ende der Umkehrertür (50) verbunden ist und dessen zweites Ende mittels einer vierten Gelenkverbindung (L4) mit einer Innenwand (22) des Sekundärkanals (24) verbunden ist,
dass die Umkehrertür (50) an ihrem vorderen Ende mittels einer fünften Verbindung (L5) an der Kaskade montiert ist, wodurch dieses vordere Ende entlang der Kaskade (46) gleiten und bezüglich dieser schwenken kann, wobei die zweite Gelenkverbindung (L2) zwischen der dritten Gelenkverbindung (L3) und der fünften Verbindung (L5) angeordnet ist, so dass das Vorliegen des ersten und des zweiten Verbindungsteils (52a, 52b) in Kombination mit dem Betrieb des Zylinders (42) bei einem Übergang aus der inaktiven Konfiguration in die aktive Konfiguration gleichzeitig zu Folgendem führt:
- einer Bewegung der Kaskade (46) nach hinten in Richtung einer Triebwerksgondelöffnung (70), die von der beweglichen äußeren Triebwerksgondelverkleidung (28), die mit der Kaskade (46) nach hinten getrieben wird, freigelegt wird, und
- einer kombinierten Bewegung der Umkehrertür (50) bezüglich der Kaskade (46), was einerseits zu der Bewegung des vorderen Endes der Tür (50) nach hinten entlang der Kaskade (46) und andererseits zu dem Schwenken dieser Tür um die fünfte Verbindung (L5) führt, um das Tauchen ihres hinteren Endes in den Sekundärkanal (24) hervorzurufen.

2. Triebwerksgondel nach Anspruch 1, **dadurch gekennzeichnet, dass** das erste Verbindungsteil in der inaktiven Konfiguration in dem Aufnahmeraum (60) aufgenommen ist und dass das zweite Verbindungsteil teilweise in diesem Aufnahmeraum (60) aufgenommen ist.

3. Triebwerksgondel nach einem der vorhergehenden Ansprüche, **dadurch gekennzeichnet, dass** ein Teil des zweiten Verbindungsteils (52b) in inaktiver Konfiguration im Wesentlichen radial in dem Sekundärkanal (24) angeordnet und vorzugsweise dazu bestimmt ist, von einem Arm (16) eines Zwischengehäuses des Turbotriebwerks gegenüber einem Sekundärluftstrom abgedeckt zu werden, und dass das zweite Verbindungsteil (52b) in aktiver Konfiguration örtlich im Wesentlichen parallel zu der Innenwand (22) des Sekundärkanals angeordnet ist.

4. Triebwerksgondel nach einem der vorhergehenden Ansprüche, **dadurch gekennzeichnet, dass** das erste Verbindungsteil (52a) allgemein L-förmig ist.

5. Triebwerksgondel nach einem der vorhergehenden Ansprüche, **dadurch gekennzeichnet, dass** der Zylinder eine Zylinderstange (43) umfasst, die an einem vorderen Ende der Kaskade (46) angelenkt ist.

6. Triebwerksgondel nach einem der vorhergehenden Ansprüche, **dadurch gekennzeichnet, dass** die fünfte Verbindung (L5) mindestens eine Türführungsschiene (62), die fest mit der Kaskade verbunden ist und sich entlang dieser erstreckt, sowie eine Rolle aufweist, die mit dieser Schiene zusammenwirkt und an dem vorderen Ende der Umkehrertür (50) montiert ist.

7. Triebwerksgondel nach einem der vorhergehenden Ansprüche, **dadurch gekennzeichnet, dass** der Aufnahmeraum (60) ein innerer Raum der Triebwerksgondel (30) ist.

8. Triebwerksgondel nach einem der vorhergehenden Ansprüche, **dadurch gekennzeichnet, dass** die Kaskade (46) und die Umkehrertür (50) in ihrer inaktiven Konfiguration im Wesentlichen parallel verlaufen und sich jeweils mindestens teilweise radial gegenüber eines Gebläsegehäuses (8) des Turbotriebwerks befinden.

9. Triebwerksgondel nach einem der vorhergehenden Ansprüche, **dadurch gekennzeichnet, dass** das Schubumkehrersystem mehrere in tangentialer Richtung des Turbotriebwerks benachbarte Kaskaden (46) aufweist, vorzugsweise derart, dass eine Kaskadenanordnung gebildet wird, die sich über einen Winkelbereich von 300 bis 360° um eine Längsachse (6) des Turbotriebwerks erstreckt, und dass jede Kaskade (46) einer Umkehrertür (50) zugeordnet ist.

10. Triebwerksgondel nach dem vorhergehenden Anspruch, **dadurch gekennzeichnet, dass** die Kaskaden (46) mechanisch miteinander verbunden sind, so dass die Anzahl von Zylindern (42) vorzugsweise kleiner als die Anzahl von Kaskaden ist.

11. Zweistrom-Luftfahrzeugturbotriebwerk (1), umfassend eine Triebwerksgondel (30) nach einem der vorhergehenden Ansprüche.

12. Luftfahrzeug (100), umfassend mindestens ein Turbotriebwerk (1) nach dem vorhergehenden Anspruch.

## Claims

1. Nacelle (30) for a two-flow aircraft turbomachine (1) comprising a thrust reverser system (40), the reverser system comprising at least one thrust reversal cascade (46) through which the air of a secondary duct (24) of the turbomachine is intended to circulate in the active configuration of the reverser system, the system also having at least one reverser door (50) configured to at least partially obstruct said secondary duct (24) when the system is in the active configuration, the system also comprising at least one actuation jack (42), **characterized in that**, in an inactive configuration of the reverser system, the door (50) is entirely housed in a housing space (60) which is situated outside said secondary duct (24) and in which said cascade (46), which is driven by said jack (42) and of which a rear end is secured to a mobile outer nacelle cowling (28), is also entirely located, the system also comprising:
- a first connecting piece (52a) of which a first end is connected to the inside of said mobile outer nacelle cowling (28) by a first articulated connection (L1), and of which a second end is connected to the reverser door (50) by a second articulated connection (L2) ;
- a second connecting piece (52b) of which a first end is connected to a rear end of the reverser door (50) by a third articulated connection (L3), and of which a second end is connected to an inner wall (22) of the secondary duct (24) by a fourth articulated connection (L4) ;
and **in that** the reverser door (50) is mounted at its front end on the cascade by way of a fifth connection (L5) allowing this front end to slide along the cascade (46) and to pivot relative thereto, the second articulated connection (L2) being arranged between the third articulated connection (L3) and the fifth connection (L5) such that, when passing from the inactive configuration to the active configuration, the presence of the first and second connecting pieces (52a, 52b) combined with the action of said jack (42) gives rise simultaneously to:
- a rearwards movement of the cascade (46) in the direction of a nacelle opening (70), opened up by the mobile outer nacelle cowling (28) that is driven rearwards with the cascade (46); and
- a combined movement of the reverser door (50) relative to the cascade (46), resulting in both the movement of the front end of the door (50) rearwards along the cascade (46) and the pivoting of this door about the fifth connection (L5) so as to cause its rear end to enter the secondary duct (24).

2. Nacelle according to Claim 1, **characterized in that**, in the inactive configuration, the first connecting piece is housed in the housing space (60), and **in that** the second connecting piece is partially housed in this housing space (60).

3. Nacelle according to either one of the preceding claims, **characterized in that**, in the inactive configuration, part of the second connecting piece (52b) is arranged substantially radially in the secondary duct (24), and is preferably intended to be shielded from a secondary air flow by an arm (16) of an intermediate casing of the turbomachine, and **in that**, in the active configuration, said second connecting piece (52b) is arranged locally substantially parallel to the inner wall (22) of the secondary duct.

4. Nacelle according to any one of the preceding claims, **characterized in that** the first connecting piece (52a) adopts the overall shape of an "L".

5. Nacelle according to any one of the preceding claims, **characterized in that** the jack comprises a jack rod (43) articulated on a front end of the cascade (46).

6. Nacelle according to any one of the preceding claims, **characterized in that** the fifth connection (L5) has at least one door guiding rail (62) as one with the cascade and extending along the latter, and a roller that cooperates with this rail and is mounted on the front end of the reverser door (50).

7. Nacelle according to any one of the preceding claims, **characterized in that** said housing space (60) is an inner space of the nacelle (30).

8. Nacelle according to any one of the preceding claims, **characterized in that**, in its inactive configuration, the cascade (46) and the reverser door (50) are substantially parallel and are each situated at least partially radially opposite a fan casing (8) of the turbomachine.

9. Nacelle according to any one of the preceding claims, **characterized in that** the thrust reverser system has a plurality of cascades (46) that are adjacent in the tangential direction of the turbomachine, preferably so as to form an assembly of cascades extending over an angular sector of 300 to 360° about a longitudinal axis (6) of the turbomachine, and **in that** each cascade (46) is associated with a reverser door (50).

10. Nacelle according to the preceding claim, **characterized in that** the cascades (46) are mechanically connected to one another such that the number of jacks (42) is preferentially less than the number of cascades.

11. Two-flow aircraft turbomachine (1) comprising a nacelle (30) according to any one of the preceding claims.

12. Aircraft (100) comprising at least one turbomachine (1) according to the preceding claim.
